Europäisches Patentamt

European Patent Office

Office européen des brevets

(19)

(11) Numéro de publication : **0 036 215 B1**

(12) **FASCICULE DE BREVET EUROPÉEN**

(45) Date de publication du fascicule du brevet :
13.06.84

(51) Int. Cl.³ : **A 01 C 7/04, B 65 G 47/14**

(21) Numéro de dépôt : **81102023.9**

(22) Date de dépôt : **18.03.81**

(54) **Appareil pour saisir un à un des éléments de très faible taille.**

(30) Priorité : **19.03.80 FR 8006168**

(43) Date de publication de la demande :
**23.09.81 Bulletin 81/38**

(45) Mention de la délivrance du brevet :
**13.06.84 Bulletin 84/24**

(84) Etats contractants désignés :
**BE CH DE GB IT LI NL SE**

(56) Documents cités :
**FR-A- 2 390 772**
**US-A- 4 251 011**

(73) Titulaire : **Germaine, Michel**
**3, Sente des Bûcherons**
**F-76350 Oissel (FR)**

(72) Inventeur : **Germaine, Michel**
**3, Sente des Bûcherons**
**F-76350 Oissel (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

## Description

La présente invention se rapporte à un appareil permettant de saisir un à un des éléments de très faible taille, sans en omettre aucun.

Dans de nombreux domaines d'application, il est nécessaire de prélever un à un des éléments solides de très faible taille dans un récipient contenant ces éléments en vrac et de les transférer un à un. Ce problème se pose par exemple en laboratoire lorsqu'il s'agit de saisir et de compter des cristaux. Un autre domaine dans lequel se rencontre le même problème est l'ensemencement et plus particulièrement l'ensemencement dans des mottes de compost. La germination en mottes de compost est une technique qui s'est considérablement développée depuis quelques années dans le domaine maraîcher et horticole et qui consiste à produire, sur une machine dite presse-mottes, des mottes de compost qui constituent un milieu de germination de qualité exceptionnelle pour les graines maraîchères et florales, et à planter les graines dans ces mottes. Ces mottes de compost sont, après germination et levée des graines, mises en place telles quelles par les maraîchers et horticulteurs. La principale difficulté de cette technique réside dans la mise en place des graines dans les mottes de compost. En effet, il est nécessaire que chaque motte produite par la presse-mottes reçoive une graine, et une seule.

Les graines des plantes maraîchères et florales étant de taille extrêmement faible, il n'existe pas à l'heure actuelle d'appareil permettant de saisir avec certitude de telles graines une à une, sans en omettre aucune, pour les transférer dans les mottes de compost.

Un appareil connu (FR-A-2 390 772) utilisé pour l'ensemencement de mottes de compost comprend une aiguille creuse présentant, au voisinage de son extrémité libre, une ouverture de section inférieure à la taille des graines à saisir, cette aiguille étant engagée dans un récipient dans lequel des graines sont maintenues en suspension. Sous l'effet d'une dépression établie à l'intérieur de l'aiguille, les graines sont attirées contre l'ouverture de l'aiguille. Toutefois, il s'avère que la probabilité de saisir une graine et une seule à l'aide de l'aiguille de cet appareil connu n'est pas satisfaisante. En effet, compte tenu du fait que les graines sont en suspension dans de l'air dans le récipient, il arrive qu'aucune graine ne s'accroche à l'ouverture de l'aiguille ou alors que plusieurs graines s'accrochent autour de l'ouverture de l'aiguille. Dans un cas comme dans l'autre, il en résulte un ensemencement imparfait des mottes.

Dans un autre appareil connu (US-A-4,251,011) utilisé pour l'ensemencement de mottes de compost, les graines sont éparpillées sur une tôle et une aiguille creuse présentant une ouverture au voisinage de son extrémité libre est déplacée sur cette tôle, de sorte que sous l'effet de la dépression établie à l'intérieur de l'aiguille, les graines rencontrées par l'aiguille s'accrochent à l'ouverture de cette dernière. Dans cet appareil également, il arrive que l'aiguille ne rencontre pas de graine ou alors en rencontre plusieurs qui viennent alors s'accrocher autour de l'ouverture de l'aiguille. Afin d'empêcher que plusieurs graines puissent rester accrochées à l'aiguille, on fait ensuite passer cette dernière sur une arête destinée à retenir les graines en excès. Il s'avère cependant que cet appareil connu qui implique un guidage extrêmement précis de l'aiguille par rapport à l'arête de retenue ne permet pas non plus d'assurer qu'une graine, et une seule, reste accrochée à chaque fois à l'aiguille.

Pour tourner cette difficulté qui est due à la taille extrêmement faible des graines ainsi qu'à la diversité des formes des graines (plus ou moins sphériques, allongées, plates), les producteurs de graines proposent des graines enrobées dans des produits neutres appropriés tels que l'argile. Ces graines ainsi transformées en petites billes sont alors saisissables. Cependant, le prix de revient de ces graines dites enrobées est évidemment nettement plus élevé que celui des graines nues. Malgré cela, les appareils connus n'assurent pas un rendement satisfaisant. Il en est de même pour les graines calibrées proposées également par les producteurs de graines.

Enfin, un problème particulier à l'ensemencement dans des mottes de compost à l'aide des appareils connus réside dans le fait que les graines, qu'elles soient nues, calibrées ou enrobées, ne sont pas pré-germées. En effet, la plantation de graines pré-germées dans des mottes de composte permet de réduire sensiblement la durée nécessaire à partir de l'ensemencement des mottes pour obtenir des plants de taille suffisante pour la mise en place des mottes chez l'horticulteur ou le maraîcher. L'ensemencement à l'aide de graines prégermées n'est évidemment pas possible avec des graines enrobées puisque la pré-germination des graines qui s'effectue en milieu liquide détruirait l'enrobage de ces graines. Par ailleurs, ces graines pré-germées doivent rester dans le milieu liquide jusqu'au moment de l'ensemencement, ce qui fait qu'il est nécessaire de les saisir directement dans ce milieu liquide, ce qui est impossible avec les appareils connus.

La présente invention a pour objet un appareil pour saisir des éléments de très faibles tailles pour les transférer jusqu'à un emplacement de réception, cet appareil assurant qu'un élément, et un seul, soit saisi à chaque fois et transféré à l'emplacement de réception. L'invention a également pour objet un appareil du type défini ci-dessus permettant, moyennant des modifications très simples, de saisir et de transférer un à un des éléments de formes et de dimensions différentes. Enfin, l'invention a pour objet un appareil du type défini ci-dessus permettant de saisir un à un des éléments de faible taille contenus dans un milieu liquide et de les transférer à un emplacement de réception.

L'appareil conforme à l'invention pour saisir un à un des éléments de très faible taille tels que des graines ou des cristaux et les transférer à un emplacement de réception comprend une aiguille creuse présentant, au voisinage de son extrémité libre, une ouverture de section inférieure à la taille des éléments à saisir et fixée par son autre extrémité à un dispositif pour faire pénétrer l'aiguille depuis le haut dans un récipient contenant les éléments à saisir, la retirer de ce récipient et la transférer à l'emplacement de réception. Cet appareil comprend également un dispositif pour créer une dépression dans l'aiguille lorsque cette dernière pénètre dans le récipient et pendant le transfert de l'aiguille à l'emplacement de réception et pour supprimer la dépression ou créer une surpression dans l'aiguille lorsque cette dernière se trouve à l'emplacement de réception.

L'appareil conforme à l'invention comprend, en outre, un tube coulissant avec du jeu sur l'aiguille et animé suivant l'axe de l'aiguille d'un mouvement vibratoire d'une amplitude telle que l'extrémité inférieure du tube soit située au-dessus de l'ouverture de l'aiguille lorsque le tube se trouve au point mort haut et soit située en-dessous de l'ouverture de l'aiguille lorsque le tube se trouve au point mort bas. Ce tube animé d'un mouvement de vibrations repousse de l'ouverture de l'aiguille et détache de l'aiguille, lorsque cette dernière se trouve dans le récipient, tous les éléments accrochés autour de l'ouverture de l'aiguille sous l'effet de la dépression, sauf un seul élément occupant une position centrale par rapport à l'ouverture de l'aiguille.

Dans le cas où les éléments à saisir et à transférer sont sphériques ou sensiblement sphériques, ladite ouverture est avantageusement ménagée en bout de l'aiguille et le tube animé d'un mouvement de vibrations présente un diamètre intérieur supérieur au diamètre des éléments.

Dans le cas où les éléments à saisir et à transférer sont sensiblement plats, l'aiguille présente avantageusement un méplat latéral s'étendant depuis l'extrémité libre de l'aiguille sur une faible distance vers le haut de manière qu'un seul élément puisse venir se placer entre ledit méplat et le tube, l'ouverture étant ménagée latéralement dans l'aiguille, dans ledit méplat, à la partie supérieure de ce dernier.

Dans le cas où les éléments à saisir et à transférer présentent une forme allongée, l'aiguille présente avantageusement, à faible distance au-dessus de son extrémité libre, un enfoncement latéral dont la profondeur et la largeur vont en diminuant vers l'extrémité libre de l'aiguille et l'ouverture est ménagée latéralement dans l'aiguille, dans la partie la plus profonde et la plus large de cet enfoncement.

Afin d'assurer une action correcte, sur les éléments à saisir, de la dépression régnant à l'intérieur de l'aiguille, donc à l'ouverture de cette dernière, le tube animé d'un mouvement de vibrations est avantageusement fendu latéralement ou pourvu d'une rainure longitudinale intérieure ou percé de trous latéraux à faible distance au-dessus de son extrémité inférieure. Cela empêche le tube qui coulisse avec un très faible jeu sur l'aiguille de retenir par aspiration des graines à son extrémité inférieure lorsqu'il est en position basse, sous l'effet de la dépression à l'ouverture de l'aiguille.

En se référant aux dessins annexés, on va décrire ci-après un mode de réalisation illustratif et non limitatif d'un appareil conforme à l'invention ; sur les dessins annexés :

la figure 1 est une vue en élévation, partiellement en coupe, d'un appareil conforme à l'invention, avec le dispositif imprimant un mouvement de vibrations au tube coulissant sur l'aiguille ;

les figures 2, 3 et 4 représentent plusieurs modes de réalisation de l'aiguille pour saisir des éléments de différentes formes ;

les figures 5 et 6 représentent un mode de réalisation de la transmission du mouvement de vibrations au tube coulissant sur l'aiguille.

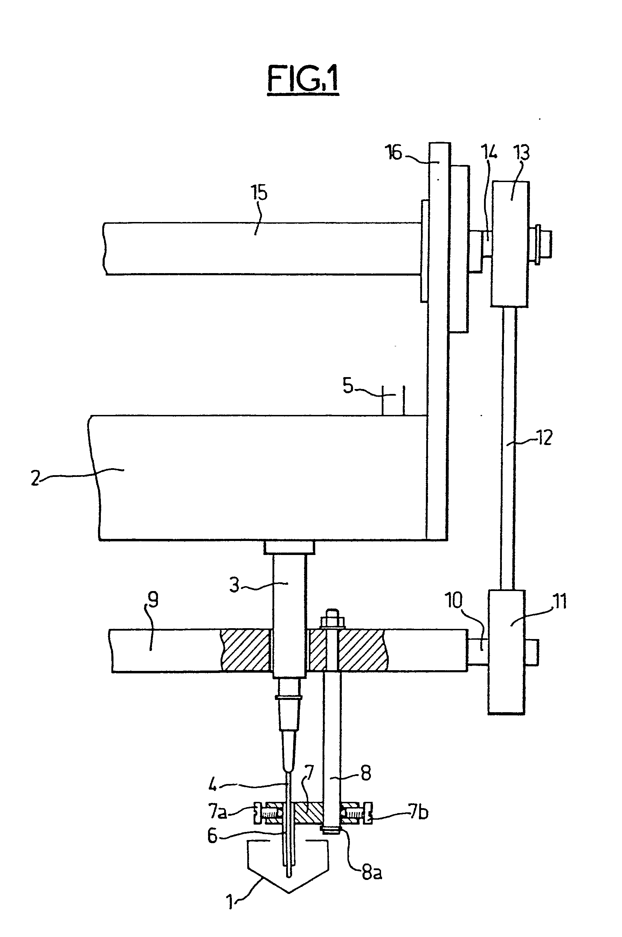

L'appareil tel qu'illustré par la fig. 1 est destiné à l'ensemencement de mottes de compost à la sortie de ces mottes d'une presse-mottes, de type connu en soi. Cet appareil est installé à la sortie de la presse-mottes, au-dessus d'un tapis-transporteur sur lequel les mottes de compost sortent de la presse en plusieurs rangées longitudinales placées côte à côte. Ce tapis transporteur non représenté se déplace perpendiculairement au plan de dessin de la fig. 1.

Au-dessus de chaque rangée de mottes reposant sur le tapis transporteur est installé un godet 1 contenant des graines en vrac. Un seul godet 1 est représenté sur la fig. 1, les godets pour les rangées voisines de mottes étant placés les uns à côté des autres (vers la gauche sur la fig. 1) à des intervalles correspondants à l'écartement entre les rangées de mottes.

Un caisson transversal 2 s'étendant sur toute la largeur du tapis transporteur de mottes porte, à sa partie inférieure, une rangée de montures 3 verticales dont chacune reçoit à son extrémité inférieure une aiguille 4 creuse pourvue d'une ouverture au voisinage de son extrémité inférieure. Les montures 3 avec les aiguilles 4 sont disposées les unes à côté des autres à des intervalles correspondant aux intervalles entre les godets 1. Le caisson 2 comporte un raccord 5 auquel est reliée une source de dépression et, éventuellement, de pression, par l'intermédiaire d'un distributeur non représenté.

Chaque aiguille 4 est entourée avec un faible jeu par un tube 6. Le tube 6 est fixé à un support 7 à l'aide d'une vis de blocage 7a, ce qui permet de régler la position relative du tube 6 par rapport au support 7. Le support 7 est monté coulissant sur une tige 8 qui est parallèle à l'aiguille 4, présente une butée inférieure 8a pour le support 7 et est elle-même fixée à une barre transversale 9 s'étendant sur toute la largeur du tapis transporteur de mottes. La barre 9 porte une tige 8 pour le tube 6 de chaque aiguille 4.

La barre 9 coulisse sur les montures 3 des aiguilles 4 et présente à chaque extrémité un tourbillon 10 dont un seul est représenté et sur lequel est monté le pied 11 d'une bielle 12. La tête 13 de la bielle 12 tourbillonne sur un maneton 14 d'un arbre transversal 15 entraîné en rotation par un moto-variateur non représenté, par l'intermédiaire d'une transmission à courroie, à chaîne, à pignons ou analogue. L'arbre 15 est monté en rotation, au voisinage de ses deux extrémités, dans des flasques 16 servant également de support au caisson 2.

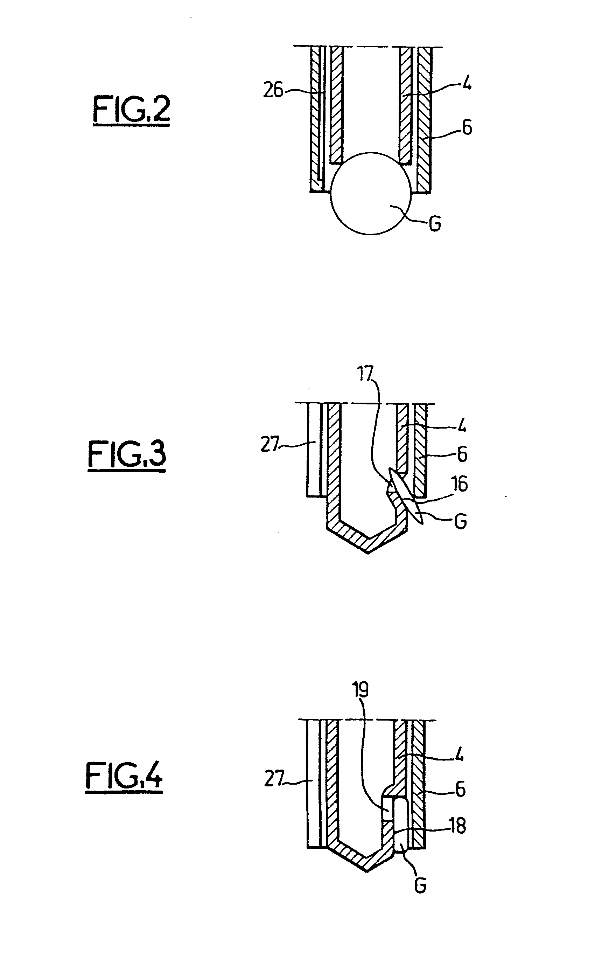

La fig. 2 montre un mode de réalisation de l'extrémité inférieure de l'aiguille 4. Cette aiguille 4 est conformée pour saisir dans le godet 1 une graine G de forme sensiblement sphérique. L'aiguille creuse 4 est ouverte à son extrémité inférieure, le diamètre intérieur de l'aiguille 4 étant inférieur au diamètre de la graine G. Le diamètre intérieur du tube 6 est par contre supérieur au diamètre de la graine G.

En se référant aux fig. 1 et 2, on va décrire ci-après le mode de fonctionnement de l'appareil conforme à l'invention.

L'ensemble de l'appareil de la fig. 1, à l'exception des godets 1, est mobile sous l'action d'un mécanisme non représenté qui permet de lui imprimer un déplacement entre une position dans laquelle les aiguilles 4 plongent dans les godets 1 et une position dans laquelle chaque aiguille 4 se trouve juste au-dessus d'une motte de compost sortant du presse-mottes. L'arbre 15 est entraîné en permanence en rotation et imprime ainsi à chaque tube 6 un mouvement de vibrations rapide suivant l'axe de l'aiguille 4 associée. Le tube 6 est fixé au support 7 dans une position telle que lorsque le tube 6 se trouve au point mort haut, son extrémité inférieure soit située au-dessus de l'extrémité inférieure ouverte de l'aiguille 4. Au point mort bas du tube 6, l'extrémité inférieure du tube se trouve par contre en dessous de l'extrémité inférieure ouverte de l'aiguille 4, comme représenté sur la fig. 2.

Le support 7 peut être bloqué sur la tige 8 à l'aide d'une vis 7b ou coulisser sur la tige 8, auquel cas la butée 8a définit le point mort bas et le point mort haut du tube 6 lorsque la tige 8 se trouve en position basse ou en position haute.

Lorsque l'aiguille 4 est plongée dans le godet 1 renfermant des graines en vrac, le distributeur qui est relié au raccord 5 du caisson 2 et qui est commandé en fonction du mouvement imprimé à l'ensemble de l'appareil selon la fig. 1 branche le caisson 2, donc l'aiguille 4, sur la source de dépression, de sorte qu'une graine G au moins se trouve aspirée contre l'ouverture inférieure de l'aiguille 4. Si, au moment où l'aiguille 4 plonge dans le godet, plusieurs graines se trouvent aspirée contre l'ouverture de l'aiguille 4, le mouvement vibratoire du tube 6 détache ses graines de l'aiguille 4 en ne laissant accrochée à l'ouverture de l'aiguille 4 que la graine occupant une position centrale par rapport à cette ouverture et ne subissant, de ce fait, pas l'action du tube 6. Le mouvement de vibrations du tube 6 doit être suffisamment rapide pour que le tube 6 effectue plusieurs courses de va-et-vient pendant que l'aiguille 4 est plongée dans les graines contenues dans le godet 1, de sorte qu'une graine G puisse avec certitude venir occuper une position centrale par rapport à l'ouverture de l'aiguille 4 et être retenue contre cette ouverture sous l'effet de la dépression avant que l'aiguille 4 ne sorte du godet 1.

L'aiguille 4 avec la graine G qui s'y trouve accrochée est ensuite transférée, sous l'effet du mouvement de l'ensemble de l'appareil, au-dessus de la motte de compost à ensemencer, la dépression étant maintenue dans le caisson 2, donc dans l'aiguille 4. Lorsque l'aiguille 4 se trouve au-dessus de la motte à ensemencer, le distributeur relié au raccord 5 est inversé de manière à mettre le caisson 2 sous la pression de l'air ambiant ou, de préférence, sous surpression, ce qui détache la graine G de l'aiguille 4, de sorte que la graine G tombe sur la motte de compost. L'ensemble de l'appareil est ensuite animé d'un mouvement en sens contraire, le distributeur est inversé pour mettre l'aiguille 4 sous dépression et cette dernière plonge dans le godet 1 pour reprendre une nouvelle graine G.

La fig. 3 représente une aiguille conformée pour saisir une graine G de forme allongée. Une telle graine pourrait en principe être saisie également par une aiguille ouverte à son extrémité inférieure comme la fig. 2. Il est cependant préférable, comme représenté sur la fig. 3, de munir dans ce cas l'aiguille, à faible distance au-dessus de son extrémité libre, d'un enfoncement latéral 16 dont la profondeur et la largeur vont en diminuant vers l'extrémité libre de l'aiguille. L'ouverture 17 est, dans ce cas, ménagée latéralement dans l'aiguille 4, dans la partie la plus profonde et la plus large de l'enfoncement 16. La graine G se place ainsi, sous l'effet des vibrations du tube 6, dans l'enfoncement 16 de manière que l'une de ses extrémités pénètre dans l'ouverture 17. L'autre extrémité de la graine G déborde latéralement sur l'aiguille 4. Pour éviter un écrasement de la graine G par le tube 6, il est indispensable, que le support 7 du tube 6 puisse coulisser sur la tige 8 et ne soit pas bloqué à l'aide de la vis 7b de manière que lorsqu'une graine G occupe la position représentée sur la fig. 3, la graine G limite l'amplitude du mouvement de vibrations du tube 6 vers le bas et le tube 6 ne porte contre la graine G que par son propre poids qui doit bien entendu être suffisamment faible pour que la graine G ne soit pas abîmée.

Néanmoins, le tube 6 détache de l'aiguille 4 toutes les graines excédentaires qui pourraient s'accrocher à l'aiguille 4 sous l'effet de la dépression, sauf la graine G occupant la position représentée sur la fig. 3.

La fig. 4 illustre une aiguille 4 dont l'extrémité inférieure est conformée pour saisir une graine G de forme plate. L'aiguille 4 présente dans ce cas, un méplat latéral 18 s'étendant depuis l'extrémité inférieure de l'aiguille 4 sur une faible distance vers le haut. L'ouverture 19 est ménagée latéralement dans l'aiguille 4, à la partie supérieure du méplat 18.

Comme dans le mode de réalisation de la fig. 2, le tube 6 peut ici être bloqué sur la tige 8 à l'aide de la vis 7b de sorte que le tube 6 suit de façon positive le mouvement de vibrations de la barre 9. Toutefois, dans ces deux modes de réalisation, il est également possible de laisser le support 7 coulisser sur la tige 8 jusqu'à la butée inférieure 8a à condition de réaliser le tube 6 de manière qu'il présente un poids suffisant pour détacher de l'aiguille toutes les graines excédentaires.

Le fonctionnement de l'appareil conforme à l'invention a été décrit ci-dessus dans son application au transfert de graines sèches, contenues en vrac dans un godet 1, mais l'appareil peut être utilisé sans aucune modification de l'aiguille 4 et du tube 6 pour saisir des graines pré-germées dans un milieu liquide. Il suffit pour cela de maintenir les graines à saisir en suspension dans un milieu liquide. Pour cela, il est avantageux d'établir un circuit de milieu liquide, contenant les graines pré-germées en suspension, à travers les godets 1 successifs pour assurer que chaque aiguille 4 rencontre au moins une graine lorsqu'elle se trouve plongée dans un godet. Sous l'effet de la dépression, cette graine est aspirée contre l'ouverture de l'aiguille et le mouvement de vibrations du tube 6 détache toutes les graines excédentaires qui pourraient adhérer à l'aiguille non seulement sous l'action de la dépression, mais également de l'effet tensio-actif du milieu liquide.

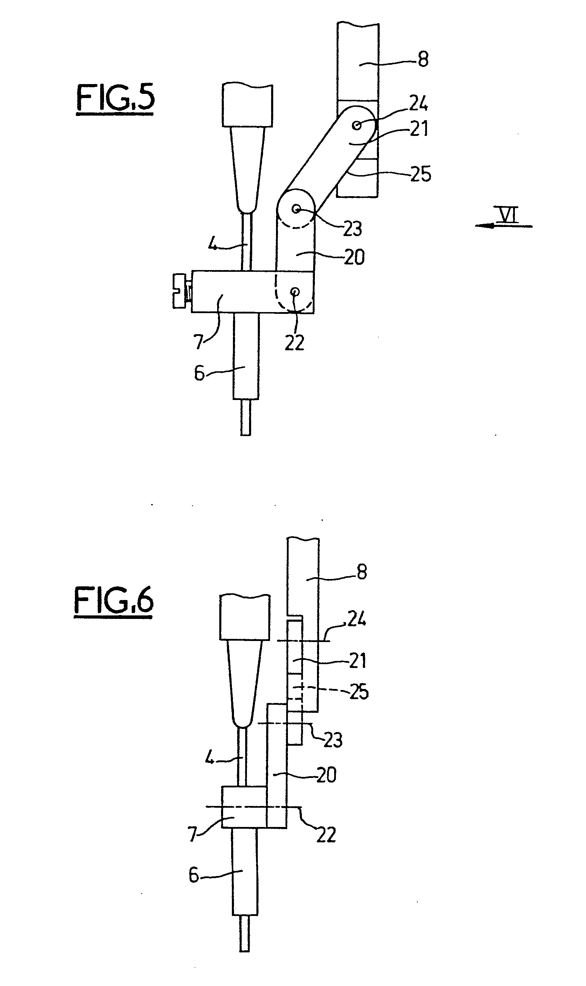

Il s'est avéré qu'à certaines fréquences de vibrations imprimées à la tige 8, le support 7, lorsqu'il coulisse sur la tige 8 comme cela est nécessaire pour saisir des graines allongées par une ouverture latérale (fig. 3) ne suit pas correctement la tige 8. C'est pourquoi il est avantageux, lorsque le support 7 ne doit pas être bloqué sur la tige 8, de le relier à cette dernière, comme représenté sur les fig. 5 et 6, par un jeu de deux bielles 20 et 21 dont la première, sensiblement verticale, est articulée par un axe horizontal 22 sur le support 7 et par un axe horizontal 23 sur la bielle 21 elle-même articulée par un axe horizontal 24 sur la tige 8. La tige 8 comporte une butée 25 limitant le pivotement vers le bas de la bielle 21 de manière que cette dernière reste toujours inclinée par rapport à la tige 8 et ne puisse pas venir dans l'alignement de cette dernière. Lors de la course de descente de la tige 8, le tube 6 descend avec le support 7 par gravité jusqu'à toucher une graine G occupant la position visible sur la fig. 3. La descente subséquente supplémentaire de la tige 8 fait pivoter la bielle 21 dans le sens des aiguilles d'une montre autour de l'axe 24. Pour empêcher le tube 6 d'aspirer les graines lorsqu'il se trouve en position basse, compte tenu du très faible jeu entre le tube 6 et l'aiguille 4, le tube 6 peut présenter soit une rainure longitudinale intérieure 26, comme représenté sur la fig. 2, soit une fente longitudinale 27 à l'opposé de l'ouverture latérale de l'aiguille, comme représenté sur les fig. 3 et 4, soit encore des trous latéraux à faible distance au-dessus de son extrémité inférieure, de sorte que la dépression d'aspiration régnant à l'ouverture de l'aiguille ne se trouve pas à l'extrémité inférieure ouverte du tube.

Dans son application à l'ensemencement, l'appareil conforme à l'invention peut être utilisé pour saisir et transférer des graines nues, calibrées ou non, des graines dites enrobées ainsi que des graines pré-germées, en assurant dans tous les cas une préhension et un transfert des graines une à une, avec une efficacité de presque 100 %.

Il convient cependant de noter que l'appareil n'est en aucune manière limité à l'ensemencement et peut trouver de multiples autres applications dans des domaines très divers, pour saisir un à un des éléments de très faible taille et de formes très diverses, par exemple pour compter des cristaux en laboratoire. L'adaptation de l'appareil à la forme et aux dimensions des éléments à saisir est extrêmement simple puisqu'il suffit de changer l'aiguille 4 et le tube 6.

Enfin, lorsqu'il est nécessaire de saisir chaque fois plus d'un élément, par exemple deux ou trois, il est possible d'utiliser une aiguille 4 présentant plusieurs ouvertures latérales selon les fig. 3 et 4.

## Revendications

1. Appareil pour saisir un à un des éléments (G) de très faible taille tels que des graines ou des cristaux, pour les transférer jusqu'à un emplacement de réception, comprenant une aiguille (4) creuse présentant au voisinage d'une première extrémité une ouverture de section inférieure à la taille des éléments (G) à saisir et fixée par son autre extrémité à un dispositif (3) pour faire pénétrer l'aiguille (4) depuis le haut dans un récipient (1) contenant les éléments à saisir, la retirer de ce récipient (1) et la transférer à l'emplacement de réception, et un dispositif pour créer une dépression dans l'aiguille (4) lorsque cette dernière pénètre dans le récipient (1) et pendant le transfert de l'aiguille à l'emplacement de réception et pour supprimer la dépression ou créer une surpression dans l'aiguille lorsque cette dernière se trouve à l'emplacement de réception, caractérisé par le fait qu'il comprend, en outre, un tube (6) coulissant avec du jeu sur l'aiguille (4) et animé suivant l'axe de l'aiguille d'un mouvement vibratoire d'une amplitude telle que l'extrémité inférieure du tube (6) soit située au-dessus de l'ouverture de l'aiguille (4) lorsque le tube (6) se trouve au point mort haut et soit située en dessous de l'ouverture de l'aiguille (4) lorsque le tube (6) se trouve au point mort bas, de manière à détacher de l'aiguille, lorsque cette dernière se trouve dans le récipient, tous les éléments accrochés autour de l'ouverture de l'aiguille sous l'effet de la dépression, sauf un seul qui occupe une position centrale par rapport à l'ouverture de l'aiguille.

2. Appareil suivant la revendication 1, caractérisé par le fait que pour saisir des éléments sphériques ou sensiblement sphériques, ladite ouverture est ménagée en bout de l'aiguille (4) et ledit tube (6) présente un diamètre intérieur supérieur au diamètre des éléments à saisir.

3. Appareil suivant la revendication 1, caractérisé par le fait que pour saisir des éléments plats, l'aiguille (4) présente un méplat latéral (18) s'étendant depuis l'extrémité libre de l'aiguille sur une faible distance vers le haut et ladite ouverture (19) est ménagée latéralement dans l'aiguille, à la partie supérieure dudit méplat.

4. Appareil suivant la revendication 1, caractérisé par le fait que pour saisir des éléments de forme allongée, l'aiguille (4) présente, à faible distance au-dessus de son extrémité libre, un enfoncement latéral (16) dont la profondeur et la largeur vont en diminuant vers l'extrémité libre de l'aiguille et ladite ouverture (17) est ménagée latéralement dans l'aiguille, dans la partie la plus profonde et la plus large de cet enfoncement.

5. Appareil suivant l'une quelconque des revendications précédentes, caractérisé par le fait que ledit tube (6) est fendu latéralement ou percé de trous latéraux à distance au-dessus de son extrémité inférieure.

6. Appareil suivant l'une quelconque des revendications précédentes, caractérisé par le fait qu'il comprend, pour imprimer le mouvement de vibrations au tube (6), un support (9) monté au-dessus de l'aiguille en étant mobile en va-et-vient suivant l'axe de cette dernière sous l'action d'une commande à manivelle (12, 14), une tige (8) fixée audit support (9) de manière à s'étendre vers le bas parallèlement à l'axe de l'aiguille, et un support (7) auquel est fixé ledit tube (6) et qui est relié à ladite tige (8).

7. Appareil suivant la revendication 6, caractérisé par le fait que ledit support (7) est monté coulissant sur ladite tige (8) et que cette dernière présente une butée inférieure (8a) pour le support (7).

8. Appareil suivant la revendication 7, caractérisé par le fait que ledit support (7) peut être bloqué sur ladite tige (8).

9. Appareil suivant la revendication 6, caractérisé par le fait que ledit support (7) est relié à ladite tige (8) par un jeu de deux bielles (20, 21) articulés entre elles, avec l'une (20) articulée par son extrémité libre sur ledit support (7) et l'autre (21) sur ladite tige (8), par des axes horizontaux (22, 23, 24), l'une (20) desdites bielles étant sensiblement verticale et l'autre (21) étant inclinée par rapport à la verticale et coopérant avec une butée (25) prévue sur ladite tige (8) pour empêcher ladite bielle (21) de venir en alignement avec la tige (8).

10. Application de l'appareil suivant l'une quelconque des revendications précédentes à l'ensemencement de mottes de compost à la sortie d'un presse-mottes, à l'aide de graines nues, calibrées ou non, de graines pré-germées ou de graines enrobées.

## Claims

1. An apparatus for picking up one by one very small size elements (G) such as seeds or crystals in order to transfer them to a reception position, comprising a hollow needle (4) having an opening with a crosssection less than the size of the elements (G) to be picked up near a first end and secured at the other end thereof to a device (3) for dipping the needle (4) from above into a receptacle (1) containing the elements to be picked up, for withdrawing it from this receptacle (1) and transferring it to the reception position, and a device to set up a negative pressure in the needle (4) when it enters the receptacle (1) and during the transfer of the needle to the reception position and to suppress the negative pressure or set up an overpressure in the needle when the latter is at the reception position, characterized by the fact that it also comprises a tube (6) sliding freely over the needle (4) and provided with a vibratory movement along the needle axis of such an amplitude that the bottom end of the tube (6) is located above the needle (4) opening when the tube (6) is at the top dead centre and is located below the needle (4) opening when the tube (6) is at the bottom dead centre, so as to detach from the needle, when the latter is in the receptacle, any elements clinging round the needle opening due to the negative pressure, except only one which is centrally positioned with respect to the needle opening.

2. The apparatus according to claim 1, characterized by the fact that in order to pick up spherical or substantially spherical elements the said opening is made in the end of the needle (4) and the said tube (6) has an inside diameter exceeding the diameter of the elements to be picekd up.

3. The apparatus according to claim 1, characterized by the fact that in order to pick up flat elements the needle (4) has a lateral flat (18) extending from the free end of the needle a short distance up and the said opening (19) is made in the side of the needle at the top of the said flat.

4. The apparatus according to claim 1, characterized by the fact that in order to pick up oblong or long elements the needle (4) has, a short distance above the free end thereof, a lateral recess (16) the depth and width of which diminish towards the free end of the needle, and the said opening (17) is made in the side of the needle, in the deepest and widest part of this recess.

5. The apparatus according to any of the previous claims, characterized by the fact that the said tube (6) is slit on the side or pierced with lateral holes some distance above the bottom end thereof.

6. The apparatus according to any of the previous claims, characterized by the fact that it comprises, in order to impart a vibratory movement to the tube (6), a support (9) mounted above the needle and movable back and forth along the axis of this needle under the action of a crank drive (12, 14), a rod (8) secured to the said support (9) so as to extend downwards parallel with the needle axis, and a support (7) to which the said tube (6) is secured and with which the said rod (8) is connected.

7. The apparatus according to claim 6, characterized by the fact that the said support (7) is mounted to slide over the said rod (8) and that the latter has a bottom stop (8a) for the support (7).

8. The apparatus according to claim 7, characterized by the fact that the said support (7) can be locked on the said rod (8).

9. The apparatus according to claim 6, characterized by the fact that the said support (7) is connected with the said rod (8) by a set of two connecting rods (20, 21) pivoted together, with one (20) having its free end pivoted on the said support (7) and the other (21) being pivoted on the said rod (8) by horizontal pins (22, 23, 24), with one (20) of these connecting rods being substantially vertical and the other (21) being inclined to the vertical and co-operating with a stop (25) provided on the said rod (8) to prevent the said connecting rod (21) from coming into alignment with the rod (8).

10. An application of the apparatus according to any of the previous claims, to seeding compost planting bricks leaving a compost brick press, using uncoated seeds, sized or unsized, pre-germinated seeds or coated seeds.

**Ansprüche**

1. Gerät zum vereinzelten Ergreifen von Teilchen (G) sehr kleiner Größe wie z. B. Körner oder Kristalle um sie zu einem Aufnahmeort zu befördern, mit einer Hohlnadel (4), die an einem ersten Ende eine Öffnung mit kleinerem Querschnitt als die Größe der Aufzunehmenden Teilchen (G) hat, und mit ihrem anderen Ende an einer Vorrichtung (3) befestigt ist, um die Nadel (4) von oben in einen Behälter (1) einzuführen, der die zu ergreifenden Teilchen (G) enthält, sie aus diesem Behälter (1) zu ziehen und sie zu dem Aufnahmeort zu fördern, ferner mit einer Vorrichtung zum Erzeugen eines Unterdrucks in der Nadel (1) beim Eindringen derselben in den Behälter (1) und während der Überführung der Nadel an den Aufnahmeort, und zum Abschalten des Unterdrucks bzw. zum Schaffen eines Überdrucks in der Nadel, sobald sich diese am Aufnahmeort befindet, dadurch gekennzeichnet, daß das Gerät ferner ein Rohr (6) enthält, das mit Spiel auf der Nadel (4) gleitet und entlang der Achse der Nadel eine Vibrationsbewegung mit einer solchen Amplitude ausführt, daß das untere Ende des Rohrs (6) oberhalb der Öffnung der Nadel (4) zu liegen kommt, wenn sich das Rohr (6) am oberen Totpunkt befindet, und unterhalb der Öffnung der Nadel (4) zu liegen kommt, wenn sich das Rohr (6) am unteren Totpunkt befindet, so daß alle Teilchen, die sich unter der Einwirkung des Unterdrucks um die Öffnung der Nadel angehängt haben, wenn sich diese in Behälter befindet, abgetreift werden, abgesehen von einem einzigen Teilchen, das eine Mittelstellung im Bezug auf die Nadelöffnung eingenommen hat.

2. Gerät gemäß Anspruch 1, dadurch gekennzeichnet, daß zum Ergreifen von kugelförmigen oder im wesentlichen kugelförmigen Teilchen die genannte Öffnung unten an der Spitze der Nadel (4) angebracht ist und das genannte Rohr (6) einen größeren Durchmesser als die zu ergreifenden Teilchen hat.

3. Gerät gemäß Anspruch 1, dadurch gekennzeichnet, daß zum Ergreifen flacher Teilchen die Nadel (4) eine seitliche Abflachung (18), die sich vom freien Ende der Nadel auf eine kurze Strecke nach oben erstreckt, und die genannte Öffnung (19) seitlich in der Nadel im oberen Teil der genannten Abflachung angebracht ist.

4. Gerät gemäß Anspruch 1, dadruch gekennzeichnet, daß zum Ergreifen von Teilchen länglicher Form die Nadel (4) in kurzem Abstand über ihrem freien Ende eine seitliche Vertiefung (16) hat, deren Tiefe und Breite gegen das freie Nadelende zu abnehmen und die genannte Öffnung (17) seitlich in der Nadel am tiefsten und breitesten Teil der Vertiefung angebracht ist.

5. Gerät gemäß einem beliebigen der obigen Ansprüche, dadurch gekennzeichnet, daß das genannte Rohr (6) seitlich geschlitzt ist oder von seitlichen im Abstand über seinem unteren Ende angeordneten Löchern durchbohrt ist.

6. Gerät gemäß einem beliebigen der obigen Ansprüche, dadurch gekennzeichnet, daß es, um dem Rohr (6) die Vibrationsbewegung zu erteilen, eine halterung (9), die über der Nadel montiert ist und entlang der Achse dieser letzteren unter der Einwirkung eines Kurbeltriebes (12, 14) eine Hin- und Herbewegung ausführt, einen Stab (8) welcher an der genannten Halterung (9) so angebracht ist, daß er sich parallel zur Achse der Nadel nach unten erstreckt, und eine Halterung (7) an die das genannte Rohr (6) befestigt ist, und die mit dem genannten Stab (8) verbunden ist, besitzt.

7. Gerät gemäß Anspruch 6, dadurch gekennzeichnet, daß die genannte Halterung (7) gleitend auf dem genannten Stab (8) montiert ist, und daß dieser letztere einen unteren Anschlag (8a) für die Halterung (7) aufweist.

8. Gerät gemäß Anspruch 7, dadurch gekennzeichnet, daß die genannte Halterung (7) auf den genannten Stab (8) festlegbar ist.

9. Gerät gemäß Anspruch 6, dadurch gekennzeichnet, daß die genannte Halterung (7) mit dem genannten Stab (8) über einen Satz von zwei untereinander angelenkten Koppeln (20, 21) verbunden ist, von denen die eine (20) mit ihrem freien Ende an der genannten Halterung (7) und die andere (21) an den genannten Stab (8) durch horizontale Schwenkachsen (22, 23, 24) angelenkt sind, wobei die eine der genannten Koppeln (20) im wesentlichen vertikal steht und die andere (21) gegenüber der Vertikalen geneigt ist und mit einem auf dem genannten Stab (8) vorgesehen Anschlag (25) zusammenwirkt, der verhindert, daß diese Koppel (21) mit dem Stab (8) fluchten kann.

10. Anwendung des genannten Geräts gemäß einem beliebigen der vorstehenden Ansprüche zum Besäen von Kompostpresslingen am Ausgang einer Kompostpresse mit kalibrierten oder nicht kalibrierten nackten Samenkörnern, mit vorgekeimten Körnern oder mit umhüllten Körnern.

# FIG.1

FIG.2

FIG.3

FIG.4

## FIG.5

VI

## FIG.6